# EUROPÄISCHE PATENTSCHRIFT

(11) **EP 1 240 993 B1**
(45) Veröffentlichungstag und Bekanntmachung des Hinweises auf die Patenterteilung: **02.02.2005**
(21) Anmeldenummer: 01125935.5
(22) Anmeldetag: 31.10.2001
(51) Int. Cl.: B29C 45/18, B29C 47/10, B29C 45/82, F04B 7/04, B29C 44/42

(54) **Ventilanordnung zur Steuerung der Zudosierung von fluiden Additiven in eine Kunststoffschmelze**
Valve arrangement for controlling the dosage of fluid additives into a plastic melt
Arrangement de soupapes pour le dosage contrôlé des additifs fluides dans de matière plastique en fusion

(30) Priorität: 16.02.2001 DE 10107205; 25.07.2001 DE 10136243
(43) Veröffentlichungstag der Anmeldung: 18.09.2002
(73) Patentinhaber: KLÖCKNER DESMA SCHUHMASCHINEN GmbH, 28832 Achim (DE)
(72) Erfinder: Kraemer, Rudolf, 28832 Achim (DE)
(74) Vertreter: Röther, Peter, Dipl.-Phys.

(56) Entgegenhaltungen:
- EP-A- 0 623 445
- DE-A- 3 020 122
- DE-A- 4 210 687
- US-A- 5 964 231

## Beschreibung

Die Erfindung betrifft ein Verfahren zur Zudosierung von fluiden Additiven in eine in einem Extruder einer Spritzgießmaschine plastifizierte Kunststoffschmelze.

Ein derartiges Verfahren ist bereits aus der DE-OS 43 14 941 bekannt. Hierbei geht es um eine Spritzgießeinheit an Spritzgießmaschinen zur Herstellung thermoplastischer Kunststoffteile, wobei die Spritzeinheit einen Plastifizier- und Einspritzzylinder, eine darin axial bewegbare und rotierbare Plastifizier- und Einspritzschnecke, eine gegen den Plastifizierzylinder absperrbare Einspritzdüse sowie eine Farbzudosiereinrichtung mit mindestens einem Farbbehälter aufweist, der über eine Farbzuleitung mit der Spritzeinheit verbunden ist. In die Farbzuleitung ist ein Farbdosierzylinder integriert, dessen Kolbenbewegung mit der Axialbewegung der Plastifizier- und Einspritzschnecke gekoppelt ist.

In der Zuleitung vom Farbvorratsbehälter zum Dosierzylinder befindet sich ein Rückschlagventil (21). In der Farbzuleitung vom Dosierzylinder zum Extruder befindet sich ein weiteres Rückschlagventil (23).

Bewegt sich beim Plastifiziervorgang die Schnecke im Extruder nach hinten, bewegt sich der mit dieser Bewegung gekoppelte Kolben des Dosierzylinders ebenfalls nach hinten und gibt einen Raum für aus dem Farbvorratsbehälter abgegebene Farbe frei. Bei diesem Vorgang ist das Rückschlagventil (21) durch den Druck der anströmenden Farbe geöffnet. Wird die dosierte Farbe dann beim Einspritzvorgang über die Zuleitung in den Extruder gedrückt, schließt das Rückschlagventil (21) selbsttätig, während das Rückschlagventil (23) öffnet.

Das Rückschlagventil (23) ist dafür gedacht, daß beim Plastifiziervorgang keine Kunststoffschmelze in die Farbzuleitung eindringen kann.

Nachteilig bei dieser vorbekannten Vorrichtung ist allerdings das zwangsläufige Öffnen und Schließen der passiven Rückschlagventile. Darüber hinaus ist nicht ausgeschlossen, daß beim Dosieren der Farbe nicht nur Farbe in den Dosierzylinder gelangt, sondern auch über das Rückschlagventil (23) in den Extruder. Da zu diesem Zeitpunkt aber der Kunststoff im Extruder plastifiziert werden soll, wäre ein vorzeitiges Einströmen von Farbe sehr nachteilhaft.

Aus der DE-A 3 020 122 ist darüber hinaus bekannt, eine Ventilanordnung vorzusehen, bei der die Ventile extern ansteuerbar sind, wodurch sich zwar eine bessere Regelung der Vorrichtung ergibt, ein sofortiger Additivwechsel (Farbwechsel), ohne dass mehr als ein Spritzgußteil ausgesondert werden muss, ist mit dieser Vorrichtung allerdings nicht möglich. Darüber hinaus sind mit den dort beschriebenen Verfahren nur recht grobe Dosierergebnisse zu erwarten, da eine direkte Kopplung zwischen Extruderschnecke und Dosierkolben nicht gegeben ist.

Der Erfindung liegt daher die Aufgabe zugrunde, ein Verfahren der eingangs genannten Art so zu führen, dass der Additiv bzw. Farbwechsel bei minimiertem Ausschuß schnell durchzuführen ist.

Die Erfindung löst diese Aufgabe mit der Gesamtheit der Merkmale des Anspruchs 1.

Vorteilhafte Ausführungsformen der Erfindung ergeben sich aus den Unteransprüchen.

Beide Ventile sind extern ansteuerbar und das erste der Ventile ist zum Freigeben bzw. Absperren der Zuleitung von einem Additivvorratsbehälter zu einem Dosierzylinder vorgesehen, aber das zweite Ventil zum Freigeben bzw. Absperren der Zuleitung direkt vom Dosierzylinder zum Extruder, wobei von der Zuleitung vom Additizrvorratsbehälter zum ersten der Ventile vor diesem Ventil eine zum Additiworratsbehälter zurückführende Leitung abzweigt.

Bei den zuzudosierenden Additiven kann es sich um flüssige oder pastöse Farbe zum Färben der Kunststoffschmelze oder beispielsweise um Schaumbildner handeln, die zur Herstellung von aufgeschäumten Kunststoffteilen dienen.

Das Verfahren läuft dabei so ab, daß die beiden Ventile extern angesteuert werden und zunächst in der Neutralstellung beide Ventile geschlossen sind und das Additiv vom Additivvoratsbehälter über die Zuleitung zum ersten Ventil und eine Rückführleitung, die vor dem Ventil von der Zuleitung abzweigt, zurück zum Vorratsbehälter zirkuliert,
in der Dosierstellung das erste Ventil geöffnet und das zweite Ventil geschlossen ist, parallel zum Plastifiziervorgang durch Zurückfahren des Dosierkolbens im Dosierzylinder dieser mit Additiv gefüllt wird und überflüssiges Additiv über die Rückführleitung zum Vorratsbehälter zurückgelangt,
in der Injektionsstellung das erste Ventil geschlossen und das zweite Ventil geöffnet ist, das dosierte Additiv aus dem Dosierzylinder über das geöffnete zweite Ventil in die plastifizierte und aus dem Extruder ausströmende Schmelze eingeleitet und zusammen mit der Schmelze in einer nachgeordneten Mischvorrichtung vermischt wird, bevor die Mischung in die Formkavität des Formwerkzeugs der Spritzgießmaschine gelangt, wobei die Zirkulation von Additiv aus dem Vorratsbehälter in diesen zurück weiterhin aufrechterhalten bleibt.

Dadurch, daß das zweite Ventil direkt am Schmelzeausgang des Extruders vor einer im Ausgangskanal des Extruders integrierten Mischvorrichtung angeordnet ist, ist der Vorrichtungsaufbau gegenüber der ersten Alternative vereinfacht worden, weil hierdurch das zweite Ventil nicht nur die Freigabe der Leitung vom Dosierzylinder zum Extruder veranlasst, sondern auch gleichzeitig das Eindringen von Schmelze beim Plastifiziervorgang in die Additivzuleitung verhindert.

Dadurch, daß das Additiv in einem Kreislauf in Bewegung gehalten wird, ergeben sich bessere Dosierergebnisse. Darüber hinaus kann praktisch ein sofortiger Additivwechsel (Farbwechsel) stattfinden, ohne daß mehr als ein Spritzgussteil ausgesondert werden muß.

Die Zirkulationsbewegung des Additivs wird von einer Pumpe bewerkstelligt, wobei das Additiv eine Filteranordnung durchläuft, bevor es über das erste Ventil zum Dosierzylinder gelangt. Die Kopplung der Bewegungen der Extruderschnecke und des Dosierkolbens erfolgt mechanisch oder aber hydraulisch mittels eines Proportionalventils.

Durch die hydraulische Kopplung ist das Mischverhältnis individuell einstellbar.

Die Erfindung wird im folgenden anhand von Zeichnungen dargestellt und erläutert.

Es zeigen:
- Fig. 1:: Ventilanordnung in Neutralstellung
- Fig. 2:: Ventilanordnung in Dosierstellung
- Fig. 3:: Ventilansordnung in Injektionsstellung

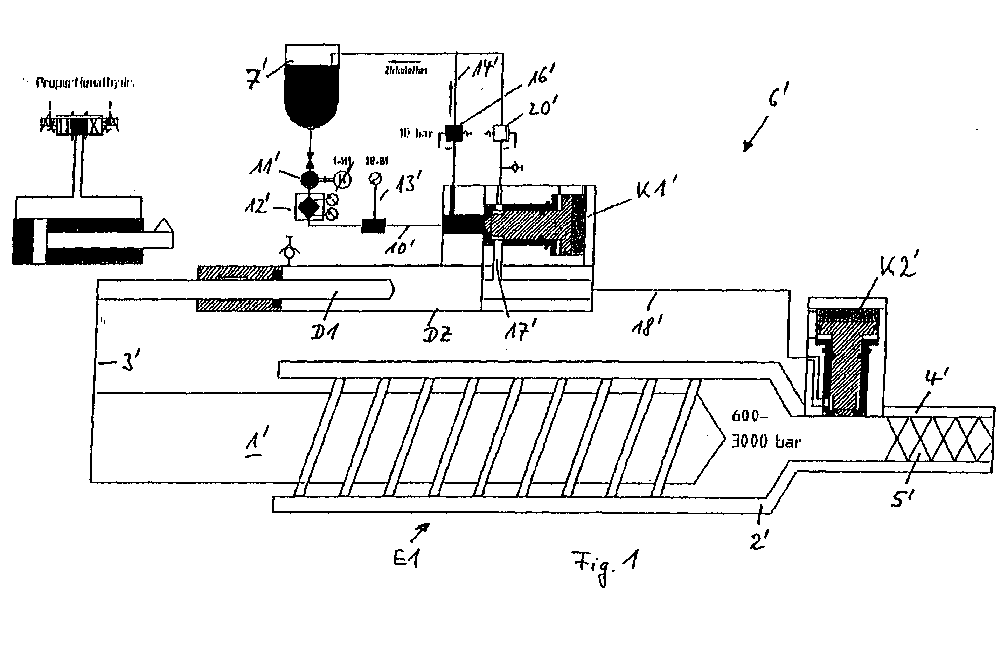

In den Zeichnungen Fig. 1 bis 3 ist eine Spritzgießanlage für thermoplastische Kunststoffe dargestellt, von der eine Plastifizier- und Einspritzschnecke (Extruder) mit dem Bezugszeichen 1 versehen ist. Die Schnecke ist rotierbar und axial verschiebbar in dem Schneckenzylinder 2 angeordnet und über eine geeignete Verbindung 3' mit dem Dosierzylinder DZ gekoppelt, in dem ein Dosierkolben D1 angeordnet ist. Die Schnecke 1' nd der Schneckenzylinder 2' bilden den Extruder E1, in dessen Düsenmundstück 4' ein Statikmischer 5' angeordnet ist.

Schnecke1' und Dosierkolben D1 sind so miteinander gekoppelt, daß, wenn sich die Plastifizierschnecke beim Plastifiziervorgang nach hinten bewegt, auch der Dosierkolben D1 nach hinten bewegt wird. Dies ist durch den PfeilP angedeutet. Der Dosierzylinder DZ ist über eine allgemein mit dem Bezugszeichen 6 versehene Ventilanordnung einerseits mit einem Farbvorratsbehälter 7' und andererseits mit dem Extruder E1 verbindbar. Die Ventilanordnung 6' besteht aus zwei Kegelsitzventilen K1' und K2'.

Vom Farbvorratsbehälter 7' führt eine Zuleitung 10' zum Ventil K1'. In dieser Zuleitung 10' ist eine Pumpe 11', im Anschluß daran ein Filtersystem 12' und ein Druckmessgerät 13 angeordnet. Von der Zuleitung 10' zum Ventil K1' führt kurz vor dem Ventil K1' eine Abzweigleitung 14' zum Additivvorratsbehälter 7' zurück. In diese Leitung ist ein Vorspannventil 16' eingeschaltet. Vom Ventil K1' führt eine weitere Leitung 17' zum Dosierzylinder DZ und eine weitere Leitung 18' vom Dosierzylinder DZ zum zweiten Ventil K2', welches direkt am Düsenmundstück 4' zwischen Schneckenspitze und Statikmischer 5' angeordnet ist.

Die Kopplung zwischen der Plastifizierschnecke 1' und dem Dosierkolben D1 ist hier lediglich angedeutet. Es kann sich um eine mechanische Kopplung handeln aber auch - wie durch die Proportionalhydraulik oberhalb des Dosierkolbens 1' angedeutet - proportional gesteuert sein. Somit kann ein individuelles Mischungsverhältnis eingestellt werden.

Fig. 1 zeigt die Neutralstellung. Das heißt, es findet keine Plastifierzung statt. Das Additiv zirkuliert vom Vorratsbehälter 7' über die Leitung 10', 14' zurück zum Additivvorratsbehälter 7'. Sowohl das Ventil K1' als auch das Ventil K2' ist geschlossen.

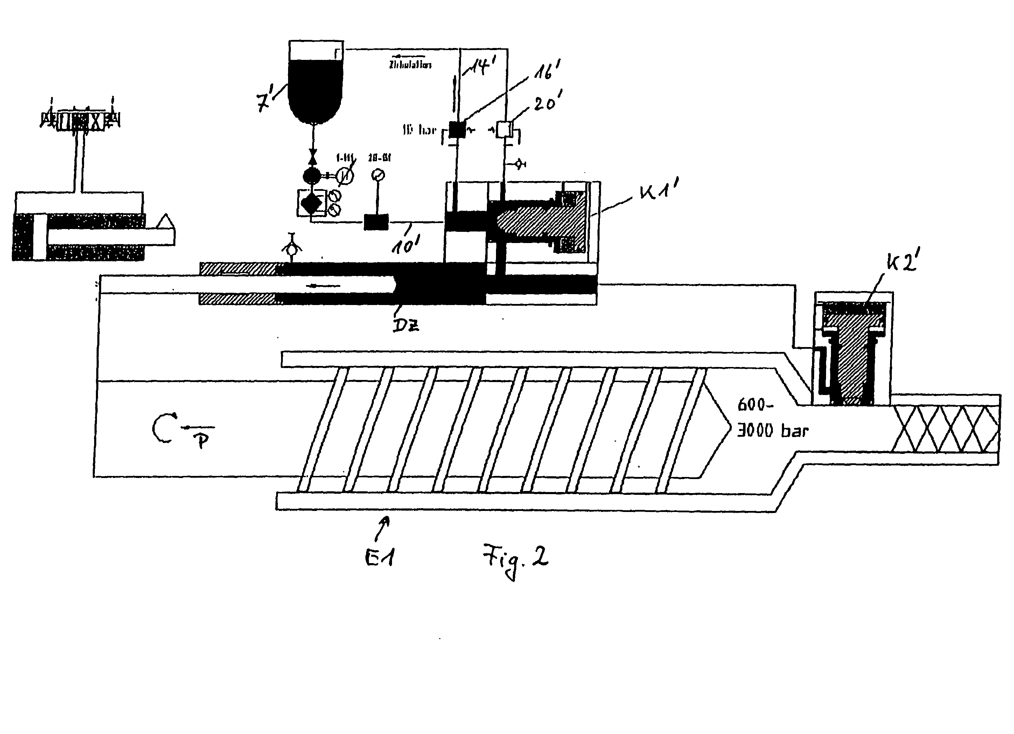

Fig. 2 zeigt die Dosierphase. Die Plastifizierschnecke 1' rotiert und plastifiziert dabei Kunststoffmaterial und bewegt sich dabei wie durch den Pfeil angedeutet nach hinten. Durch die Kopplung bewegt sich dabei auch der Dosierkolben D1 nach hinten. Das Ventil K1' ist geöffnet, das Ventil K2' ist geschlossen. Additiv beispielsweise Farbe wird über das Ventil K1' in den Dosierzylinder DZ gefördert. Überschüssiges Additiv wird zurück in den Vorratsbehälter gefördert.

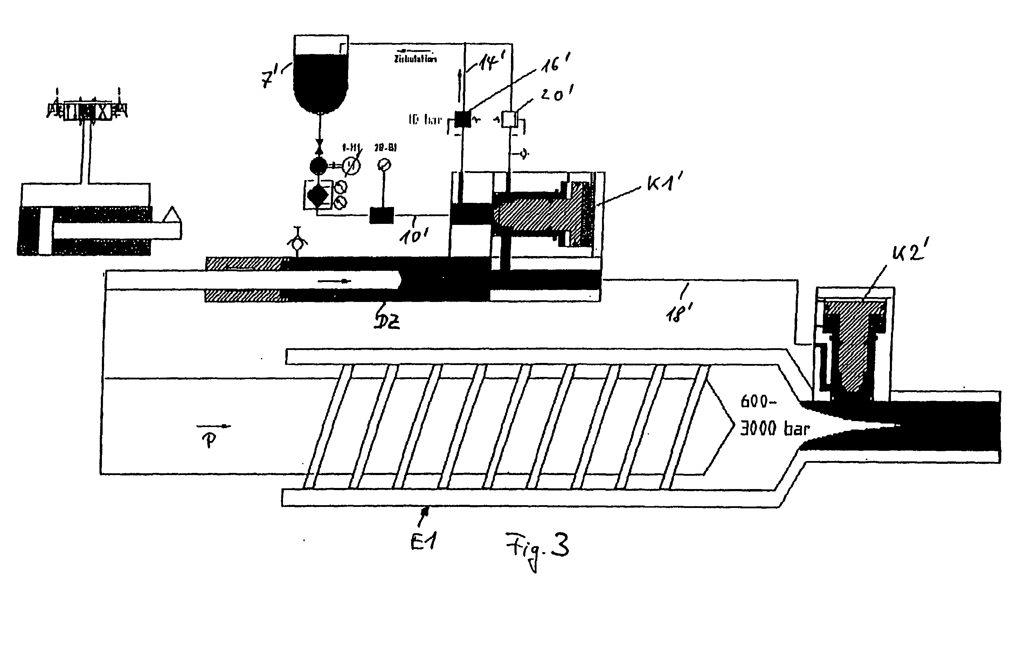

Die Fig. 3 zeigt die Einspritz- bzw. Injektionsphase. Die Schnecke wird in Pfeilrichtung bewegt und dient somit als Einspritzkolben. Durch die Kopplung bewegt sich dabei auch der Dosierkolben D1 im Dosierzylinder DZ nach vorne und drückt bei geschlossenem Ventil K1' und geöffnetem Ventil K2' die dosierte Menge an Additiv über das Ventil K2' in die ausströmende Schmelze, wonach Schmelze und Additiv anschließend im Statikmischer 5' miteinander vermischt werden. Da in dieser Phase das Ventil K1' geschlossen ist, zirkuliert das Additiv vom Vorratsbehälter 7' über die Leitung 10', 14' zurück zum Vorratsbehälter 7'.

Parallel zum Vorspannventil 16' ist in den Zeichnungen ein Sicherheitsventil 20' vorgesehen.

## Patentansprüche

1. Verfahren zur Zudosierung von fluiden Additiven in eine in einem Extruder einer Spritzgießmaschine plastifizierte Kunststoffschmelze mit einer Ventilanordnung, welche aus zwei Ventilen besteht, die extern ansteuerbar sind und das erste der Ventile K1' zum Freigeben bzw. Absperren der Zuleitung (10') von einem Additivvorratsbehälter (7') zu einem Dosierzylinder (DZ) und das zweite Ventil (K2') zum Freigeben bzw. Absperren der Zuleitung (18') vom Dosierzylinder (DZ) zum Extruder (E1) vorgesehen ist und von der Zuleitung (10') vom Additivvorratsbehälter (7') zum ersten der Ventile (K1') vor diesem Ventil (K1') eine zum Additivvorratsbehälter (7') Rückführleitung (14') abzweigt, wobei die beiden Ventile (K1', K2') zunächst in der Neutralstellung geschlossen sind und das Additiv vom Additivvorratsbehälter (7') über die Zuleitung (10') zum ersten Ventil (K1') und einer Rückführleitung (14'), die vor dem Ventil (K1') von der Zuleitung (10') abzweigt, zurück zum Vorratsbehälter (7') zirkuliert,
in der Dosierstellung das erste Ventil (K1') geöffnet und das zweite Ventil (K2') geschlossen ist, parallel zum Plastifiziervorgang durch Zurückfahren des Dosierkolbens (D1) im Dosierzylinder (DZ) dieser mit Additiv gefüllt wird und überschüssiges Additiv über die Rückführleitung (14') zum Vorratsbehälter (7') zurückgelangt,
in der Injektionsstellung das erste Ventil (K1') geschlossen und das zweite Ventil (K2') geöffnet ist, das dosierte Additiv aus dem Dosierzylinder (DZ) über das geöffnete zweite Ventil (K2') in die plastifizierte und aus dem Extruder (E1) ausströmende Schmelze eingeleitet und zusammen mit der Schmelze in einer nachgeordneten Mischvorrichtung (5') vermischt wird, bevor die Mischung in die Formkavität des Formwerkzeugs der Spritzgießmaschine gelangt, wobei die Zirkulation vom Additiv aus dem Vorratsbehälter (7') in diesen zurück weiterhin aufrechterhalten bleibt.

2. Verfahren nach Anspruch 1,
**dadurch gekennzeichnet,**
**dass** die Zirkulationsbewegung des Additivs vom Vorratsbehälter (7') in den Vorratsbehälter (7') zurück mittels einer Pumpe (11') aufrechterhalten bleibt.

3. Verfahren nach Anspruch 1 oder 2,
**dadurch gekennzeichnet,**
**dass** das aus dem Vorratsbehälter (7') kommende Additiv eine Filteranordnung (12') durchläuft.

4. Verfahren nach einem der Ansprüche 1 bis 3,
**dadurch gekennzeichnet,**
**dass** als Ventile K1', K2' druckmittelbetätigte Kegelsitzventile verwendet werden.

## Claims

1. Method for metered addition of fluid additives to a plastic melt plasticized in an extruder of an injection moulding machine with a valve arrangement which consists of two valves which are externally controllable and the first of the valves (K1') is provided to open or close the supply pipe (10') leading from an additive storage container (7') to a dosing cylinder (DZ) and the second valve (K2') is provided to open or close the supply pipe (18') from the dosing cylinder (DZ) to the extruder (E1) and a return pipe (14') to the additive storage container (7') branches off from the supply pipe (10') from the additive storage container (7') to the first of the valves (K1') at the first of the valves (K1') before this valve (K1'), whereby both valves (K1', K2') are initially closed in the neutral position and the additive from the additive storage container (7') circulates via the supply pipe (10') to the first valve (K1') and a return pipe (14'), which branches off before the valve (K1') of the supply pipe (10'), back to the storage container (7'),
in the dosing position the first valve (K1') is opened and the second valve (K2') is closed, and in parallel with the plasticization process the dosing cylinder (DZ) is filled with additive by retracting the dosing piston (D1) into said cylinder, and any excess additive returns to the storage container (7') via the return pipe (14'),
in the injection position, the first valve (K1') is closed and the second valve (K2') is open, the metered additive is sent from the dosing cylinder (DZ) via the opened second valve (K2') into the plasticized melt streaming out of the extruder (E1) and is mixed together with the melt in a downstream mixing device (5'), before the mixture goes into the mould cavity of the mould of the injection moulding machine, whereby the additive from the storage container (7') continues in its circulation back to said container.

2. Method according to claim 1,
**characterised in that**
the circulatory movement of the additive from the storage container (7') back into the storage container (7') is maintained by means of a pump (11').

3. Method according to claim 1 or 2,
**characterised in that**
the additive coming from the storage container (7') runs through a filter arrangement (12').

4. Method according to one of claims 1 to 3,
**characterised in that**
hydraulically-actuated cone-seat valves are used as valves K1', K2'.

## Revendications

1. Procédé d'addition dosée d'additifs fluides dans une masse fondue de matière plastique, plastifiée dans l'extrudeuse d'une presse d'injection, avec un agencement de clapet, qui se compose de deux clapets, qui peuvent être commandés de l'extérieur et le premier des clapets K1' est prévu pour libérer ou bloquer la conduite d'alimentation (10') d'un réservoir de stockage d'additif (7') vers un vérin de dosage (DZ) et le deuxième clapet (K2') est prévu pour libérer ou bloquer la conduite d'alimentation (18') du vérin de dosage (DZ) vers l'extrudeuse (E1) et une conduite de recyclage (14') en dérivation de la conduite d'alimentation (10') du réservoir de stockage d'additif (7') vers le premier des clapets (K1'), devant ce clapet (K1') les deux clapets (K1', K2') étant tout d'abord fermés en position neutre et l'additif circulant, de retour vers le réservoir de stockage (7'), depuis le réservoir de stockage d'additif (7'), par l'intermédiaire de la conduite d'alimentation (10'), vers le premier clapet (K1') et une conduite de recyclage (14'), en dérivation devant le clapet (K1'), de la conduite (10'),
le premier clapet (K1') étant ouvert et le deuxième clapet (K2') étant fermé en position de dosage, parallèlement au processus de plastification par retour du piston de dosage (D1) dans le vérin de dosage (DZ), celui-ci étant rempli d'additif et l'additif en surplus revenant au réservoir de stockage (7') par l'intermédiaire de la conduite de recyclage (14'),
le premier clapet (K1') étant fermé et le deuxième clapet (K2') étant ouvert en position d'injection, l'additif dosé étant introduit à partir du vérin de dosage (DZ), par l'intermédiaire du deuxième clapet ouvert (K2') dans la matière fondue plastifiée et s'écoulant hors de l'extrudeuse (E1) et étant mélangé, conjointement avec la matière fondue, dans un dispositif de mélange, placé en aval (5'), avant que le mélange ne parvienne dans la cavité de moulage de l'outil de moulage de la presse d'injection, la circulation de l'additif à partir du réservoir de stockage (7') étant maintenue par ailleurs, en retour, dans celui-ci.

2. Procédé selon la revendication 1,
**caractérisé en ce**
**que** le mouvement circulatoire de l'additif, depuis le réservoir de stockage (7'), est maintenu dans le réservoir de stockage (7'), en retour, au moyen d'une pompe (11').

3. Procédé selon la revendication 1 ou 2,
**caractérisé en ce**
**que** l'additif, qui sort du réservoir de stockage (7'), parcourt un agencement de filtre (12').

4. Procédé selon l'une des revendications 1 à 3,
**caractérisé en ce**
**que** des clapets à siège conique, actionnés par des moyens de pression, sont utilisés comme clapets K1', K2'.
